# EUROPÄISCHE PATENTSCHRIFT

(11) **EP 1 322 509 B1**
(45) Veröffentlichungstag und Bekanntmachung des Hinweises auf die Patenterteilung: **04.01.2006**
(21) Anmeldenummer: 01972047.3
(22) Anmeldetag: 12.09.2001
(51) Int. Cl.: B60T 11/26, B65D 51/16

(54) **AUSGLEICHSBEHÄLTER MIT IN DEN DECKEL EINGEFORMTEM RADIALEN LUFTKANAL**
COMPENSATION RESERVOIR COMPRISING A RADIAL AIR DUCT ARRANGED IN THE COVER
RESERVOIR DE COMPENSATION PRESENTANT UN EVENT RADIAL MENAGE DANS LE COUVERCLE

(30) Priorität: 25.09.2000 DE 10047328
(43) Veröffentlichungstag der Anmeldung: 02.07.2003
(73) Patentinhaber: Continental Teves AG & Co. oHG, 60488 Frankfurt am Main (DE)
(72) Erfinder: FEIGEL, Hans-Jörg, 61191 Rosbach (DE); TANDLER, Peter, 61479 Kronberg/Ts. (DE)
(74) Vertreter: Neumann, Stephan
(86) Internationale Anmeldenummer: PCT/EP2001/010510
(87) Internationale Veröffentlichungsnummer: WO 2002/024502

(56) Entgegenhaltungen:
- DE-A- 2 558 824
- DE-A- 3 734 421
- DE-U- 29 704 050
- GB-A- 2 115 528

## Beschreibung

Die Erfindung betrifft einen Ausgleichsbehälter, wie z.B aus DE-A-25 58 824 bekannt, mit einem Deckel für eine mit Bremsflüssigkeit arbeitende Bremsanlage. Der mit dem Ausgleichsbehälter verbundenen Deckel muß mehrerer Aufgaben erfüllen. Zum einen muß er verhindern das Bremsflüssigkeit aus dem Behälter in den Umgebungsbereich des Behälters gelangen kann, da die dann in dem Behälter fehlende Flüssigkeit im Umgebungsbereich des Behälters zu Nachteilen führen kann. Weiterhin muß der Verschluß aber gleichzeitig auch luftdurchlässig sein damit die durch Flüssigkeitsverlust oder den Temperaturänderung der Flüssigkeit auftretende Volumenänderung in dem Behälter durch Luftaustausch ausgeglichen werden kann.

Aus der DE-OS 3734421 ist ein Deckel für einen Ausgleichsbehälter bekannt, bei dem sich der Deckel aus mehreren Teilen zusammensetzt. Bei diesen Deckel ist ein Schraubgewinde derart ausgestaltet, dass die Umgebungsluft über die Windungen des Deckelgewinde ist zum äußeren Innenraum des Deckelbodens gelangen kann. Um zu verhindern, daß durch die Bewegung des Fahrzeugs in dem Behälter hin und her schwappende Bremsflüssigkeit durch den beschriebenen Luftkanal in die Umgebung gelangen kann, ist der Rand des Anschlußstutzens mit einer mit dem Deckel verbundenen Dichtung hermetisch verschlossen. Es ist wünschenswert den Luftkanal etwa in Höhe der axialen Mittelachse des Behälters mit dem Innenraum des Behälters in Verbindung treten zu lassen da hier die Niveauunterschiede der sich bewegenden Bremsflüssigkeit am geringsten sind. In der genannten Offenlegungsschrift ist daher ein Luftkanal vorgesehen, der von dem radial äußeren Innenraum des Deckels bis zu der Mittelachse des Deckels reicht. Der Luftkanal kann durch die Innenfläche der Dichtung oder durch eine spezielle gesonderte Abdeckplatte abgedeckt sein.

Die Erfindung geht daher aus von einem Ausgleichbehälter der sich aus dem Oberbegriff des Hauptanspruchs ergebenden Gattung. Aufgabe der Erfindung ist es, den Deckel weiter zu vereinfachen, so daß er bei einstückiger Ausgestaltung die an ihn zu stellenden obengenannten Forderungen gleichwohl zufriedenstellend erfüllt.

Die Aufgabe wird durch die sich aus dem kennzeichnenden Teil des Hauptanspruchs ergebende Merkmalskombination gelöst. Erfindung besteht im Prinzip also darin, in den Deckel einen in radialer Richtung verlaufenden geschlossenen Luftkanal einzuformen, wobei zusätzlich noch der Deckel mit einer einstückig eingeformten Dichtung versehen sein kann.

Für die Ausgestaltung des Luftkanals ergeben sich in Weiterbildung der Erfindung mehrere vorteilhafte Möglichkeiten. Zum einen kann entsprechend der Merkmalskombination nach Anspruch 3 der Kanal vom äußeren Rand des Deckels radial bis etwa zur Mittelachse des Deckels reichen, wobei der Kanal innerhalb des Materials des Deckels verläuft. Ein derartiger Kanal lässt sich beim Gießen des Deckels durch Einformen eines Formstiftes erreichen, der nach dem Gießvorgang in radialer Richtung aus dem Deckel herausgezogen wird. Die sich hierdurch ergebende radiale Austrittöffnung an der Außenfläche des Deckelrandes wird durch einen geeignetes Verschlußteil verschlossen. Es sind aber auch andere Verschlußarten einsetzbar wie Warmumformen aufgegossener Ansätze , die Austrittsöffnung verschließen oder verschweißen oder verkleben.

Eine andere Möglichkeit zur Formung des Luftkanals besteht durch die Verwendung der Merkmale nach Anspruch 4. Dabei wird an der Bodenfläche (vorzugsweise außen) eine Nut eingeformt, die von dem radialen Außenraum bis etwa zur Mittelachse des Deckels in radialer Richtung verläuft. Da die Nut nach außen offen ist, muß sie nach dem Gießvorgang verschlossen werden. Dies geschieht mittels einer Deckplatte, die an den Deckel angeformt ist und mittels eines Filmscharniers verschwenkt werden kann. Durch Umklappen der Deckplatte läßt sich also die offenen Nut zu einem Luftkanal verschließen.

Ein Ausführungsbeispiel der Erfindung wird nachfolgend anhand der Zeichnung erläutert.
Darin zeigt
- Fig. 1: in herausgebrochener und geschnittener Darstellung einen Deckel, in den eine radiale Zylinderöffnung durch ein gesondertes Werkzeug eingeformt wurde,
- Fig. 2: einen Schnitt durch einen Deckel, in dem die Zylinderöffnung durch eine offene radiale Nut gebildet wurde, die nachträglich mittels einer Deckplatte verschlossen wurde,
- Fig. 3: den Deckel nach Fig. 2 in geschnittener Seitenansicht und
- Fig. 4: den Deckel nach Fig. 2 und 3 in schräg von oben gesehener perspektivischer Darstellung.

Der im Schnitt dargestellte und etwa in Höhe der Mittelachse abgebrochene Deckel 1 ist an seinem Rand 2 mit nach innen weisenden Gewindegängen 3 versehen. Die Gewindegänge 3 sind in Verbindung mit dem Gewinde 4 an dem abgebrochene dargestellten Anschlußstutzen 5 des Behälters 6 derart ausgestaltet, daß sich ein längs der Gewindegänge verlaufender an sich bekannter Luftkanal ergibt, wie durch den Pfeil L angedeutet ist. Es kann somit Atmosphärendruck von der Umgebung des Deckels in den radial äußeren Innenraum 7 gelangen. Eine radial umlaufende einstückig mit dem Deckel 1 verbundene Dichtlippe 8, in die an den Deckel angegossen ist, liegt auf dem oberen Rand 9 des Behälters 6 hermetisch dichtend auf. In den Boden 10 des Deckels 1 ist eine radiale Zylinderöffnung 11 während des Gießvorgangs des Deckels eingebracht. Die Zylinderöffnung 11 durchschneidet den Innenraum 7 und den Rand 2 des Dekkels. Die Austrittöffnung 14 ist durch ein Verschlußglied 15 verschlossen. Die Zylinderöffnung 11 mündet in eine Zylinderausnehmung 16, die Zutritt zu dem Innenraum des Behälters 6 hat. Auf diese weise besteht ein Luftkanal zwischen dem Innenraum 7 des Deckels und dem Innenraum des Behälters, wobei dieser Kanal, wie erwünscht, etwa in Höhe der Mittelachse des Deckels in den Innenraum des Behälters 6 mündet.

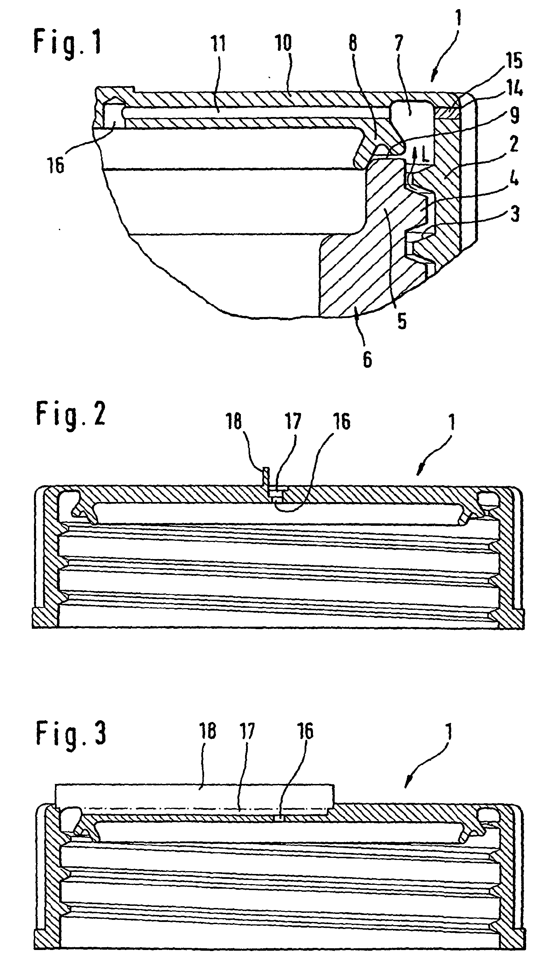

In den Figuren 2 und 3 ist die Zylinderöffnung durch eine nach oben offene Nut 17 gebildet, die durch eine Verschlußplatte 18 verschließbar ist. Die Verschlußplatte 18 ist über ein Filmscharnier einstückig mit den Deckel 1 verbunden und kann von der in Fig. 1 dargestellten senkrechten Stellung in einer waagrechter Lage geschwenkt werden, in der sie die offenen Nut 17 verschließt und so eine geschlossene Zylinderöffnung bildet , die radial innen in der Zylinderausnehmung 16 mündet. Die gestufte Nut 17 und die Verschlußplatte 18 sind derart geformt, daß der offene Rand der Verschlußplatte mit der offene Nut an ihrer oberen Kante verrasten kann. Im Rahmen der Erfindung kann die Verschlußplatte aber auch in anderer Weise verschlossen werden. Beispielsweise durch Warmumformen, Verschweißen, Verkleben einer geeigneten Verschlußplatte, die an den Deckel angeformt sein kann oder vom Dekkel getrennt bereitgestellt wird. Im übrigen kann der Deckel nach Fig. 2 und 3 entsprechend dem Deckel nach Fig. 1 aufgebaut sein.

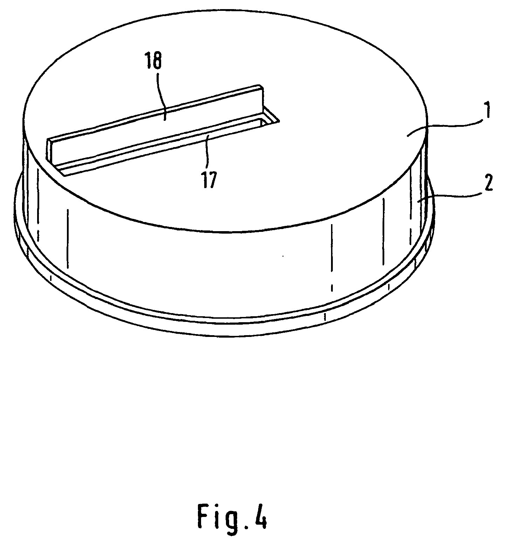

In Fig. 4 ist der Deckel nach Fig. 2 und 3 in vereinfachter Form perspektivisch dargestellt. Man erkennt den Deckel 1 mit seinem Rand 2, wobei von der Außenfläche des Deckelbodens 10 die Verschlußplatte 18 senkrecht absteht. In Fig. 4 ist weiterhin die offene Nut 17 zu erkennen, welche durch das Umlegen der Verschlußplatte 18 zu einer geschlossenen Zylinderöffnung 11 umgeformt wird.

## Patentansprüche

1. Ausgleichsbehälter (6) mit einem Deckel (1), der mit einem umlaufenden Rand (2) an einem Anschlussstutzen (5) des Ausgleichbehälters (6) vorzugsweise durch ein Gewinde (3,4) befestigbar ist, wobei eine Verbindung zwischen dem Anschlussstutzen (5) und dem umlaufenden Rand (2) derart ausgestaltet ist, dass Luft der umgebenden Atmosphäre über die Verbindung in einen radial außen liegenden Innenraum (7) an einem Boden (10) des Deckels (1) gelangen kann und wobei ein Kanal (11) vorgesehen ist, welcher den radial außen liegenden Innenraum (7) des Deckels (1) mit einer Öffnung (16) verbindet, die einen Luftzutritt zwischen einem Innenraum des Behälters (6) und dem Kanal (11) schafft, **dadurch gekennzeichnet, dass** Seitenwände des geschlossenen Kanals (11) aus dem Material des Deckels (1) einstückig geformt sind.

2. Deckel (1) für einen Ausgleichsbehälter (6) nach Anspruch 1, **dadurch gekennzeichnet, dass** der Kanal (11) durch eine Zylinderöffnung gebildet wird, die von dem radial außen liegenden Innenraum (7) des Deckels (1) radial nach innen und vorzugsweise mindestens bis zu einer Mittelachse des Deckels (1) reicht.

3. Deckel (1) nach Anspruch 2, **dadurch gekennzeichnet, dass** die Zylinderöffnung bis zu einer Außenfläche des umlaufenden Randes (2) reicht und eine Austrittöffnung (14) der Zylinderöffnung am umlaufenden Rand (2) durch ein Verschlussteil (15) verschlossen ist oder durch Warmverformung, Verschweißen bzw. Verkleben vorzugsweise eines mit dem Deckel (1) einstückig verbundenen Verschlussteils verschlossen ist.

4. Deckel (1) nach Anspruch 2, **dadurch gekennzeichnet, dass** die Zylinderöffnung durch eine in axialer Richtung offenen Nut (17) gebildet ist, die durch ein Verschlussglied (18) verschlossen ist.

5. Deckel (1) nach Anspruch 4, **dadurch gekennzeichnet, dass** das Verschlussglied (18) eine an den Deckel (1) angegossene Verschlussplatte ist, die mittels eines Filmscharniers zum Verschließen in der Nut (17) schwenkbar am Deckel (1) angeordnet ist.

6. Deckel (1) nach einem der vorangegangenen Ansprüche, **dadurch gekennzeichnet, dass** an den Boden (10) eine umlaufende Dichtlippe (8) angegossen ist, welche auf einem oberen Rand (9) des Anschlussstutzen(5) des Ausgleichbehälters (6) aufsitzt.

## Claims

1. A compensation reservoir (6) with a cover (1) which, with a circumferential edge (2), is adapted to be attached to a connecting socket (5) of the compensation reservoir (6), preferably by a thread (3, 4), wherein the connection between the connecting socket (5) and the circumferential edge (2) is so configured that air of the ambient atmosphere can propagate through the connection into a radial outwards disposed inner space (7) at a bottom (10) of the cover (1), and wherein there is provision of a duct (11) interconnecting the radial outwards disposed inner space (7) of the cover (1) and an opening (16) that allows for air to enter between an inner space of the reservoir (6) and the duct (11),
**characterized in that** lateral walls of the closed duct (11) are shaped in one piece from the material of the cover (1).

2. Cover (1) for a compensation reservoir (6) as claimed in claim 1,
**characterized in that** the duct (11) is provided by a cylinder opening which extends from the radial outwards disposed inner space (7) of the cover (1) in a radial inward direction and, preferably, reaches at least until a center axle of the cover (1).

3. Cover (1) as claimed in claim 2,
**characterized in that** the cylinder opening reaches until an outside surface of the circumferential edge (2), and an outlet (14) of the cylinder opening at the circumferential edge (2) is closed by a closing element (15) or by way of hot shaping, welding, or cementing preferably a closing element that is integrally connected to the cover (1).

4. Cover (1) as claimed in claim 2,
**characterized in that** the cylinder opening is provided by a groove (17) that is open in an axial direction and is closed by a closing element (18).

5. Cover (1) as claimed in claim 4,
**characterized in that** the closing element (18) is a closure plate cast on the cover (1), said closure plate being arranged at the cover (1) able to swing by means of a foil hinge in order to close the groove (17).

6. Cover (1) as claimed in any one of the preceding claims,
**characterized in that** a circumferential sealing lip (8) is cast to the bottom (10), said sealing lip being seated on an upper edge (9) of the connecting socket (5) of reservoir (6).

## Revendications

1. Réservoir de compensation (6) avec un couvercle (1) qui peut être fixé par un bord périphérique (2), sur une tubulure de raccordement (5) du réservoir de compensation (6), de préférence par un filetage (3, 4), une liaison entre la tubulure de raccordement (5) et le bord périphérique (2) étant conçue de manière que l'air de l'atmosphère ambiante puisse parvenir, par la liaison, dans un volume intérieur (7) situé radialement à l'extérieur, sur un fond (10) du couvercle (1), et un canal (11) étant prévu qui relie le volume intérieur (7), situé radialement à l'extérieur, du couvercle (1), à un orifice (16) qui crée une arrivée d'air entre un volume intérieur du réservoir (6) et le canal (11), **caractérisé en ce que** des parois latérales du canal (11) fermé sont formées d'une seule pièce dans la matière du couvercle (1).

2. Couvercle (1) pour un réservoir de compensation (6) selon la revendication 1, **caractérisé en ce que** le canal (11) est formé par une ouverture cylindrique qui s'étend depuis le volume intérieur (7), situé radialement à l'extérieur, du couvercle (11), radialement vers l'intérieur et de préférence au moins jusqu'à un axe médian du couvercle (1).

3. Couvercle (1) selon la revendication 2, **caractérisé en ce que** l'ouverture cylindrique s'étend jusqu'à une surface extérieure du bord périphérique (2) et un orifice de sortie (14) de l'ouverture cylindrique sur le bord périphérique (2) est fermé par un élément d'obturation (15) ou par déformation à chaud, soudage ou collage de préférence d'un élément d'obturation relié d'une seule pièce au couvercle (1).

4. Couvercle (1) selon la revendication 2, **caractérisé en ce que** l'ouverture cylindrique est formée par une rainure (17) ouverte dans la direction radiale qui est fermée par un organe d'obturation (18).

5. Couvercle (1) selon la revendication 4, **caractérisé en ce que** l'organe d'obturation (18) est une plaque d'obturation coulée sur le couvercle (1), qui est disposée sur le couvercle (1), au moyen d'une charnière-film, de manière à pouvoir pivoter dans la rainure (17) pour la fermeture.

6. Couvercle (1) selon l'une des revendications précédentes, **caractérisé en ce que** sur le fond (10) est raccordée par coulée une lèvre d'étanchéité (8) périphérique qui repose sur un bord supérieur (9) de la tubulure de raccordement (5) du réservoir de compensation (6).
